# EUROPÄISCHE PATENTSCHRIFT

(11) **EP 1 233 283 B1**
(45) Veröffentlichungstag und Bekanntmachung des Hinweises auf die Patenterteilung: **10.06.2009**
(21) Anmeldenummer: 02002945.0
(22) Anmeldetag: 11.02.2002
(51) Int. Cl.: G01V 8/20

(54) **Optoelektronische Vorrichtung**
Optoelectronic device
Dispositif optoélectronique

(30) Priorität: 14.02.2001 DE 10106755
(43) Veröffentlichungstag der Anmeldung: 21.08.2002
(73) Patentinhaber: Leuze electronic GmbH + Co. KG, 73277 Owen/Teck (DE)
(72) Erfinder: Wolf, Tilo, 73240 Wendlingen (DE); Göhner, Matthias, 72581 Dettingen/Erms (DE); Tippmann, Martin, 73235 Weilheim (DE)
(74) Vertreter: Ruckh, Rainer Gerhard

(56) Entgegenhaltungen:
- DE-A- 19 536 026
- DE-A- 19 702 634
- FR-A- 2 492 113
- US-A- 5 085 508
- US-A- 6 124 586

## Beschreibung

Die Erfindung betrifft eine optoelektronische Vorrichtung gemäß dem Oberbegriff des Anspruchs 1.

Derartige optoelektronische Vorrichtungen können insbesondere als Lichtschranken ausgebildet sein. Der in einer ersten Sensoreinheit integrierte Sender emittiert Sendelichtstrahlen in Richtung einer in Abstand angeordneten zweiten Sensoreinheit mit einem Empfänger. Die Sensoreinheiten sind in separaten Gehäusen angeordnet.

Zur Detektion von Objekten werden die Empfangssignale des Empfängers mit einem Schwellwert bewertet. Bei freiem Strahlengang gelangen die Sendelichtstrahlen ungehindert zum Empfänger, so dass das Empfangssignal oberhalb des Schwellwerts liegt. Ist ein Objekt im Strahlengang der optoelektronischen Vorrichtung angeordnet, so werden die Sendelichtstrahlen an diesem zumindest teilweise reflektiert. Damit gelangt höchstens noch ein Teil der Sendelichtstrahlen zum Empfänger, so dass das Empfangssignal unterhalb des Schwellwerts liegt. Die Auswertung der Empfangssignale erfolgt in einer an den Empfänger angeschlossenen Auswerteeinheit. Dort wird als Objektfeststellungssignal ein binäres Schaltsignal generiert und über einen Schaltausgang ausgegeben, wobei das Schaltsignal den Schaltzustand "freier Strahlengang" annimmt, falls das Empfangssignal oberhalb des Schwellwerts liegt und den Schaltzustand "Objekt vorhanden" einnimmt, falls das Empfangssignal unterhalb des Schwellwerts liegt.

Derartige optoelektronische Vorrichtungen können insbesondere auch als optische Datenübertragungssysteme ausgebildet sein.
Im einfachsten Fall weist die Vorrichtung wieder eine erste Sensoreinheit mit einem Sendelichtstrahlen emittierenden Sender und eine in Abstand zu dieser angeordnete zweite Sensoreinheit mit einem Empfänger auf. Die einzelnen Sendeeinheiten sind wiederum in separaten Gehäusen angeordnet.

Der Sender wird über eine erste Auswerteeinheit angesteuert, welche Bestandteil der ersten Sensoreinheit ist.

Die am Ausgang des Empfängers anstehenden Empfangssignale werden in einer zweiten Auswerteeinheit ausgewertet, welche Bestandteil der zweiten Sensoreinheit ist.

Über die erste Auswerteeinheit wird den Sendelichtstrahlen eine Kodierung aufgeprägt, welche die zu übertragenden Daten enthält. Beispielsweise kann die Kodierung als Frequenz- oder Amplitudenmodulation ausgebildet sein.

Mittels der Sendelichtstrahlen werden die Daten zum Empfänger geführt. Die Dekodierung der Daten erfolgt in der dem Empfänger nachgeordneten Auswerteeinheit.

Der Sender und der Empfänger der optoelektronischen Vorrichtung bilden somit eine optische Übertragungsstrecke, welche beispielsweise Bestandteil eines Bussystems sein kann.

Prinzipiell können derartige optoelektronische Vorrichtungen auch dahingehend erweitert sein, dass diese zwei optische Übertragungsstrecken mit jeweils einem Sender und Empfänger aufweisen, so dass zwischen der ersten und zweiten Sensoreinheit auf optischem Wege eine bidirektionale optische Datenübertragung erfolgen kann.

Typischerweise können die Abstände der beiden Sensoreinheiten in der Größenordnung von mehreren Metern liegen und insbesondere auch größer als hundert Meter sein. Insbesondere bei derartig großen Distanzen zwischen den Sensoreinheiten besteht ein wesentliches Problem darin, die Sensoreinheiten aufeinander so auszurichten, dass die vom Sender einer Sensoreinheit emittierten Sendelichtstrahlen auf den Empfänger der jeweils anderen Sensoreinheit treffen.

Da die Wellenlängen der Sendelichtstrahlen des Senders typischerweise im Infrarotbereich liegen, sind diese für das menschliche Auge unsichtbar und können daher zur Ausrichtung der Sensoreinheiten nicht verwendet werden.

Selbst bei im sichtbaren Wellenlängenbereich emittierenden Sendern kann das sichtbare Sendelicht nicht zur Ausrichtung verwendet werden, da das Strahlenbündel bei den typischen Abstrahlwinkeln und der zulässigen Sendeleistung auch in diesem nicht ausreichend sichtbar ist.

Prinzipiell kann zur Ausrichtung der Sensoreinheiten ein Zielfernrohr verwendet werden, welches auf eine der Sensoreinheiten aufgesteckt wird. Eine derartige Ausrichtung ist nicht nur äußerst umständlich, sondern auch ungenau. Insbesondere muss gewährleistet sein, dass das Zielfernrohr in einer genau vorgegebenen Position an der Sensoreinheit montiert ist, damit sichergestellt ist, dass eine genaue Ausrichtung des Zielfernrohres auch zu der entsprechenden Ausrichtung des Sendelichtstrahls führt. Dies lässt sich nur mit einem großen konstruktiven Aufwand mit der notwendigen Genauigkeit realisieren.

Weiterhin ist versucht worden, an einer Sensoreinheit ein Zusatzmodul zu integrieren, welches einen Testsender aufweist, der sichtbare Testsendelichtstrahlen emittiert. Auch hier muss das Zusatzmodul präzise und positionsgenau montiert werden, damit eine genaue Ausrichtung der Sensoreinheiten ermöglicht wird. Entsprechend groß ist auch in diesem Fall der konstruktive Aufwand für das Zusatzmodul und dessen Befestigung. Weiterhin besteht ein gravierender Nachteil darin, dass eine erste Person die Ausrichtung des Zusatzmoduls an der ersten Sensoreinheit vornehmen muss, während eine zweite Person an der zweiten Sensoreinheit die Güte der Ausrichtung kontrollieren muss.

Abgesehen davon, dass die Personen zur Kontrolle der Ausrichtung über große Entfernungen, typischerweise einige hundert Meter, laufend miteinander kommunizieren müssen, ist der Personaleinsatz für eine derartige Ausrichtung der optoelektronischen Vorrichtung unerwünscht hoch.

Der Erfindung liegt die Aufgabe zugrunde, eine Vorrichtung der eingangs genannten Art so auszubilden, dass eine genaue Justage mit geringem Zeit- und Kostenaufwand durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung weist zwei in Abstand zueinander angeordneten Sensoreinheiten auf. Die erste Sensoreinheit weist einen ersten Sendelichtstrahlen emittierenden Sender und die zweite Sensoreinheit einen ersten Empfänger zum Empfang der Sendelichtstrahlen auf. Die zweite Sensoreinheit weist Mittel zur Erfassung der auf den Empfänger auftreffenden Empfangslichtmenge auf. Die zweite Sensoreinheit weist einen zweiten Sendelichtstrahlen emittierenden Sender und die erste Sensoreinheit einen zweiten Empfänger auf. Der zweite Sender und der zweite Empfänger bilden eine optische Übertragungsstrecke, über welche die Werte der am ersten Empfänger erfassten Empfangslichtmengen mittels der Sendelichtstrahlen übertragen werden. Die erste Sensoreinheit weist eine Anzeigeeinheit auf, mittels derer die übertragenen Werte der Empfangslichtmengen angezeigt werden.

Der Grundgedanke der Erfindung besteht somit darin, die auf den Empfänger der zweiten Sensoreinheit auftreffende Empfangslichtmenge zu erfassen und über die vom zweiten Sender und vom zweiten Empfänger gebildete optische Übertragungsstrecke zurück zur ersten Sensoreinheit zu übertragen, um diese dort mittels der Anzeigeeinheit zu visualisieren.

Die Empfangslichtmenge liefert ein direktes Maß für die Güte der Ausrichtung der ersten Sensoreinheit auf die zweite Sensoreinheit. Bei einer exakten Ausrichtung treffen die vom ersten Sender emittierten Sendelichtstrahlen vollständig auf den ersten Empfänger in der zweiten Sensoreinheit, so dass die Empfangslichtmenge auf den Empfänger einen Maximalwert annimmt. Bei unvollständiger Ausrichtung trifft nur ein Teil der vom ersten Sender emittierten Sendelichtstrahlen auf den ersten Empfänger, so dass die Empfangslichtmenge entsprechend geringer ist.

An der Anzeigeeinheit ist die Empfangslichtmenge unmittelbar ablesbar, so dass eine Bedienperson an der ersten Sensoreinheit durch Ablesen des aktuellen Werts der Empfangslichtmenge unmittelbar die Güte der Ausrichtung der ersten Sensoreinheit überprüfen kann. Beispielsweise besteht die Anzeigeeinheit aus einer zeilenförmigen Leuchtdiodenanordnung. In diesem Fall erfolgt die Anzeige derart, dass umso mehr Leuchtdioden der Leuchtdiodenanordnung leuchten, desto größer der Wert der Empfangslichtmenge ist.

Die Bedienperson kann an der ersten Sensoreinheit die Empfangslichtmenge ablesen, die am Empfänger der gegenüberliegend und in Abstand angeordneten zweiten Sensoreinheit registriert wurde und in Abhängigkeit hiervon die erste Sensoreinheit auf die zweite Sensoreinheit ausrichten. Hierzu kann die erste Sensoreinheit zweckmäßigerweise an einer Halterung schwenkbar befestigt sein, wobei die erste Sensoreinheit in der gewünschten Schwenkposition an der Halterung fixierbar ist.

Ein wesentlicher Vorteil der erfindungsgemäßen Vorrichtung besteht darin, dass zur Ausrichtung der ersten Sensoreinheit nur eine Bedienperson benötigt wird. Da die am Empfänger der zweiten Sensoreinheit registrierte Empfangslichtmenge zur ersten Sensoreinheit zurück übertragen wird, entfällt eine zweite Bedienperson, welche die Güte der Ausrichtung an der zweiten Sensoreinheit kontrolliert.

Ein weiterer Vorteil der erfindungsgemäßen Vorrichtung besteht darin, dass zur Justage keine separaten Justiervorrichtungen, insbesondere Sensoranordnungen, montiert werden müssen. Die Justage der Vorrichtung erfordert somit einen äußerst geringen Konstruktions- und Kostenaufwand.

Prinzipiell kann der erste Sender und der erste Empfänger der Vorrichtung eine Lichtschranke oder dergleichen bilden, die zur Objekterfassung dient.

In einer vorteilhaften Ausführungsform der Erfindung bilden der erste Sender und der erste Empfänger selbst eine optische Übertragungsstrecke, über welche optische Daten übertragen werden. Damit ist mittels der optoelektronischen Vorrichtung eine bidirektionale Datenübertragung möglich.

In diesem Fall weist die optoelektronische Vorrichtung vorzugsweise einen völlig symmetrischen Aufbau auf. Dabei ist insbesondere an jeder Sensoreinheit eine Anzeigeeinheit vorgesehen, welche zur Anzeige der Empfangslichtmenge dient, die auf den Empfänger der jeweils gegenüber liegend angeordneten Sensoreinheit auftrifft.

Damit kann sowohl die erste Sensoreinheit als auch die zweite Sensoreinheit jeweils von einer Bedienperson auf die jeweils andere Sensoreinheit ausgerichtet werden. Hierzu ist vorzugsweise jede Sensoreinheit an einer Halterung schwenkbar gelagert.

Vorteilhafterweise sind an der optoelektronischen Vorrichtung Schaltmittel vorgesehen, mittels derer eine Umschaltung zwischen einem Arbeitsbetrieb und einem Justagebetrieb möglich ist.

Während des Übertragungsbetriebs erfolgt über die optischen Übertragungsstrecken der optoelektronischen Vorrichtung eine Übertragung von Nutzdaten, die beispielsweise über ein Bussystem zur Verfügung gestellt werden, an welcher die optoelektronische Vorrichtung angeschlossen ist.

Vorteilhafterweise wird bei Umschalten in den Justagebetrieb wird die Übertragung von Nutzdaten unterbrochen. Prinzipiell könnte die Nutzdatenübertragung im Justagebetrieb auch aufrecht erhalten werden. Dann werden über die optischen Übertragungsstrecken die an einem Empfänger einer Sensoreinheit registrierten Empfangslichtmengen zur jeweils gegenüberliegenden Sensoreinheit übertragen, um diese mittels der dort vorgesehenen Anzeigeeinheit anzuzeigen.

Optoelektronische Vorrichtungen mit Justagebetrieb sind aus der US 508 5 508, der DE 197 02 634 oder der DE 195 06 312 bekannt.

Die Erfindung wird im nachstehenden anhand der Zeichnungen erläutert. Es zeigen:
- Figur 1:: Schematische Darstellung eines Ausführungsbeispiels der erfindungsgemäßen optoelektronischen Vorrichtung.
- Figur 2:: Schematische Darstellung der Intensitätsverteilung des Lichtflecks der Sendelichtstrahlen auf einem der Empfänger der optoelektronischen Vorrichtung gemäß Figur 1.
- Figur 3:: Anwendungsbeispiel der optoelektronischen Vorrichtung in einem Lagersystem.

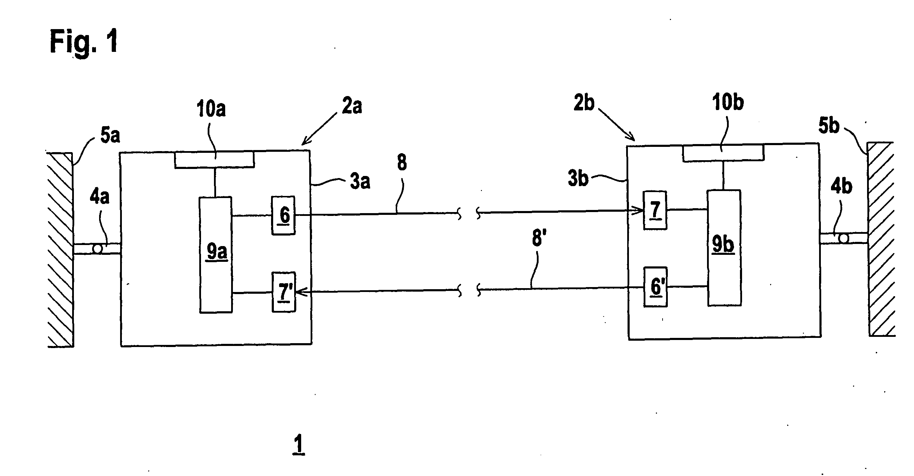

Figur 1 zeigt ein Ausführungsbeispiel der erfindungsgemäßen optoelektronischen Vorrichtung 1.
Die optoelektronische Vorrichtung 1 weist zwei in Abstand zueinander angeordnete Sensoreinheiten 2a, 2b auf, welche einen im Wesentlichen identischen Aufbau aufweisen.
Jede Sensoreinheit 2a, 2b ist in einem Gehäuse 3a, 3b integriert. Dabei ist jedes Gehäuse 3a, 3b an einer Halterung 4a, 4b schwenkbar gelagert, wobei die Halterung 4a, 4b an einer Unterlage 5a, 5b befestigt ist. Die Halterung 4a, 4b weist ein Kugelgelenk auf, mittels derer das Gehäuse 3a, 3b bezüglich der Unterlage 5a, 5b schwenkbar ist. Zudem sind nicht dargestellte Befestigungsmittel vorgesehen, mittels derer das Gehäuse 3a, 3b in einer vorgegebenen Schwenkstellung fixierbar ist.

Die optoelektronische Vorrichtung 1 weist einen ersten Sender 6 auf, der in der ersten Sensoreinheit 2a integriert ist. Zudem ist in der zweiten Sensoreinheit 2b ein erster Empfänger 7 vorgesehen. Die vom ersten Sender 6 emittierten Sendelichtstrahlen 8 sind auf den ersten Empfänger 7 geführt. Der erste Sender 6 und der erste Empfänger 7 bilden eine erste optische Übertragungsstrecke, bei welcher mittels der Sendelichtstrahlen 8 optische Daten übertragen werden.

Die optoelektronische Vorrichtung 1 weist zudem einen zweiten Sender 6' in der zweiten Sensoreinheit 2b und einen zweiten Empfänger 7' in der ersten Sensoreinheit 2a auf, wobei die vom zweiten Sender 6' emittierten Sendelichtstrahlen 8' zum zweiten Empfänger 7' geführt sind. Der zweite Sender 6' und der zweite Empfänger 7' bilden eine zweite optische Übertragungsstrecke, über welche ebenfalls optische Daten übertragen werden.

Der erste Sender 6 und der zweite Empfänger 7' der ersten Sensoreinheit 2a sind an eine Auswerteeinheit 9a angeschlossen. An einen Ausgang der Auswerteeinheit 9a ist eine Anzeigeeinheit 10a angeschlossen, die in der Gehäusewand der ersten Sensoreinheit 2a so angeordnet ist, dass diese von der Außenseite des Gehäuses 3a sichtbar ist.

Der zweite Sender 6' und der erste Empfänger 7 der zweiten Sensoreinheit 2b sind ebenfalls an eine Auswerteeinheit 9b angeschlossen, an dessen Ausgang ebenfalls eine Anzeigeeinheit 10b angeschlossen ist.

Der erste und der zweite Sender 6, 6' sind identisch ausgebildet und bestehen jeweils aus einer Leuchtdiode oder einer Laserdiode. Zur Strahlformung der Sendelichtstrahlen 8, 8' kann jedem Sender 6, 6' eine nicht dargestellte Sendeoptik nachgeordnet sein.

Auch der erste und zweite Empfänger 7, 7' sind identisch ausgebildet. Sie bestehen jeweils aus einer Fotodiode oder dergleichen. Zur Fokussierung der Sendelichtstrahlen 8, 8' auf einen Empfänger 7, 7' kann diesem jeweils eine nicht dargestellte Empfangsoptik vorgeordnet sein. Die Empfangsoptik besteht vorzugsweise aus einer großflächigen kreisförmigen Linse. In diese Linse ist eine Ausnehmung eingearbeitet, in welche die Sendeoptik eingesetzt wird, die ebenfalls von einer Linse gebildet ist.

Die Auswerteeinheiten 9a, 9b der ersten und zweiten Sensoreinheit 2a, 2b sind ebenfalls identisch ausgebildet und bestehen aus einem Mikroprozessor oder dergleichen. Mittels einer Auswerteeinheit 9a, 9b wird der jeweils angeschlossene Sender 6, 6' angesteuert. Dabei wird den vom Sender 6, 6' emittierten Sendelichtstrahlen 8, 8' eine Kodierung aufgeprägt, welche die zu übertragenden Daten enthält. Die Kodierung kann beispielsweise in Form einer Frequenzoder Amplitudenmodulation ausgebildet sein, welche den Sendelichtstrahlen 8, 8' aufgeprägt ist. Die Auswerteeinheit 9a, 9b übernimmt zudem die Dekodierung der optischen Daten, die am jeweils angeschlossenen Empfänger 7, 7' empfangen werden.

Die optoelektronische Vorrichtung 1 kann vorzugsweise an ein Bussystem angeschlossen sein. Dabei können die optischen Übertragungsstrecken der optoelektronischen Vorrichtung 1 insbesondere Bestandteil des Bussystems sein, über welche Daten auf optischem Wege übertragen werden.
Die Anzeigeeinheiten 10a, 10b an den Sensoreinheiten 2a, 2b sind ebenfalls identisch ausgebildet. Sie bestehen vorzugsweise jeweils aus einer zeilenförmigen Leuchtdiodenanordnung.
Um eine fehlerfreie Funktion der Vorrichtung 1 zu gewährleisten, müssen die Sensoreinheiten 2a, 2b aufeinander exakt ausgerichtet werden, damit die von einem Sender 6, 6' emittierten Sendelichtstrahlen 8, 8' jeweils exakt auf den Empfänger 7, 7' der gegenüberliegenden Sensoreinheit 2b, 2a ausgerichtet sind.

Die Ausrichtung der Sensoreinheiten 2a, 2b erfolgt in symmetrischer Weise und wird nachstehend am Beispiel der Ausrichtung der ersten Sensoreinheit 2a erläutert.

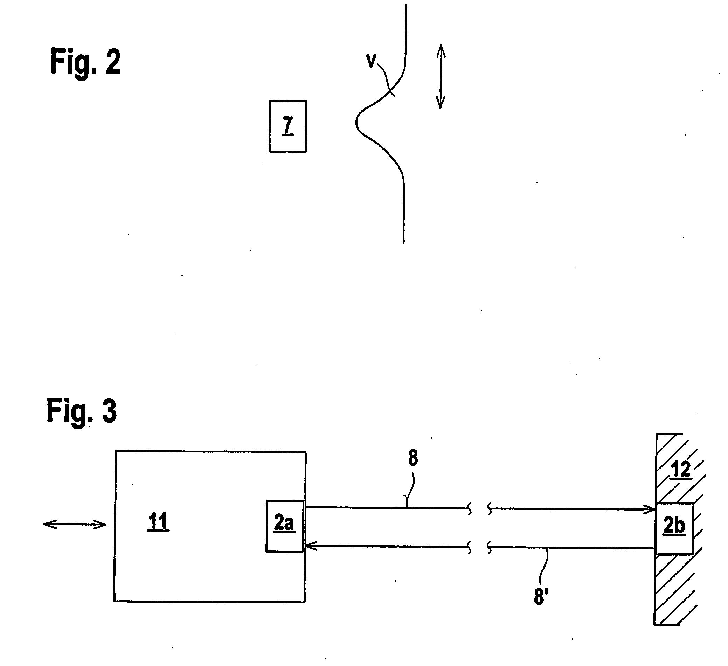

Je nach Güte der Ausrichtung treffen die vom ersten Sender 6 emittierten Sendelichtstrahlen 8 vollständig oder nur teilweise auf den ersten Empfänger 7 der zweiten Sensoreinheit 2b. Dies ist in Figur 2 schematisch dargestellt. Die Sendelichtstrahlen 8 weisen keinen scharf begrenzten Strahldurchmesser auf. Vielmehr variiert die Lichtintensität der Sendelichtstrahlen 8 gemäß der in Figur 2 dargestellten räumlichen Verteilung V, die näherungsweise einer Gaußverteilung entspricht. Dabei ist in Figur 2 schematisch die am Ort des Empfängers 7 vorhandene räumliche Verteilung V der Sendelichtstrahlen 8 dargestellt. Je nach Schwenkposition des Gehäuses 3a der ersten Sensoreinheit 2a kann der Schwerpunkt der Verteilung relativ zum Empfänger 7 verschoben sein, was mit dem Pfeil in Figur 2 schematisch dargestellt ist. Entsprechend variiert die Empfangslichtmenge am Empfänger 7, das heißt Anteil der Sendelichtstrahlen 8, welcher auf den Empfänger 7 trifft. Je größer die auf den Empfänger 7 auftreffende Empfangslichtmenge ist, desto besser ist die Ausrichtung des Senders 6 auf den jeweils zugeordneten Empfänger 7.

Als Maß für die Güte der Ausrichtung des ersten Senders 6 auf den ersten Empfänger 7 wird das zur Empfangslichtmenge proportionale Empfangslichtsignal am Ausgang des ersten Empfängers 7 in die Auswerteeinheit 9b der zweiten Sensoreinheit 2b eingelesen. Der Wert des Empfangssignals wird über die zweite optische Übertragungsstrecke zur ersten Sensoreinheit 2a übertragen und in die Auswerteeinheit 9a der ersten Sensoreinheit 2a eingelesen. Über die Auswerteeinheit 9a wird der aktuelle Wert der Empfangslichtmenge an die Anzeigeeinheit 10a ausgegeben und dort angezeigt. Die Anzeigeeinheit 10a ist dabei als Proportionalanzeige ausgebildet worden. Im vorliegenden Ausführungsbeispiel werden um so mehr Leuchtdioden der Leuchtdiodenanzeige aktiviert, desto größer der Wert der Empfangslichtmenge ist. Eine Bedienperson kann somit durch einfaches Ablesen der aktivierten, leuchtenden Leuchtdioden der Leuchtdiodenanzeige ablesen, wie groß der Wert der Empfangslichtmenge und damit der Güte der Ausrichtung ist. Durch Einstellen der Schwenkposition der ersten Sensoreinheit 2a wird diese dann von der Bedienperson justiert, bis der Wert der Empfangslichtmenge ihr Maximum erreicht.

Vorzugsweise kann nach Ausrichten der ersten Sensoreinheit 2a die Ausrichtung der zweiten Sensoreinheit 2b in gleicher Weise vorgenommen werden. Da die Sensoreinheiten 2a, 2b an der Halterung 4a, 4b nicht quer zur Strahlachse der Sendelichtstrahlen 8, 8' verschoben, sondern nur geschwenkt werden können, ist gewährleistet, dass bei der nachfolgenden Ausrichtung der zweiten Sensoreinheit 2b die Ausrichtung der ersten Sensoreinheit 2a erhalten bleibt.

Die optoelektronische Vorrichtung 1 weist nicht dargestellte Schaltmittel auf, mittels derer eine Umschaltung zwischen mehreren Betriebsarten erfolgt. Dabei ist die Vorrichtung 1 zwischen einem Arbeitsbetrieb und einem Justagebetrieb umschaltbar. Der Arbeitsbetrieb ist weiterhin in zwei Betriebsarten untergliedert, einen Normalbetrieb und einen Einrichtbetrieb. Auch zwischen diesen Betriebsarten ist eine Umschaltung mittels der oder weiterer Schaltmittel möglich. Die Schaltmittel bestehen vorzugsweise aus Schaltern an einem oder beiden Gehäusen 3a, 3b der Vorrichtung 1.

Während des Arbeitsbetriebs erfolgt über die Übertragungsstrecken der Vorrichtung 1 allein eine bidirektionale optische Übertragung von Nutzdaten, welche insbesondere von den über das Bussystem eingespeisten Daten gebildet sind.

Demgegenüber erfolgt während des Justierbetriebs allein eine Übertragung der zu den jeweiligen Empfängern 7, 7' registrierten Empfangslichtmengen, um diese an den jeweiligen Anzeigeeinheiten 10a, 10b zur Ausrichtung der Vorrichtung 1 anzuzeigen.

Während des Normalbetriebs werden die an den Empfänger 7, 7' der Vorrichtung 1 generierten Empfangssignale mit einem Schwellwert S₁ verglichen. Diese Auswertung erfolgt Auswerteeinheit 9a, 9b der jeweiligen Sensoreinheit 2a, 2b und dient zur Überprüfung, ob die bidirektionale Datenübertragung gestört ist. Eine Störung kann dadurch hervorgerufen werden, dass ein Objekt im Strahlengang der Vorrichtung 1 angeordnet ist. Weiterhin kann eine Störung dadurch entstehen, dass die Sensoreinheiten 2a, 2b dejustiert werden, so dass die Sendelichtstrahlen 8, 8' nicht mehr auf den jeweiligen Empfänger 7, 7' treffen. Weitere Ursachen für eine Störung sind zudem Verschmutzungen und/oder Alterungen von Bauelementen der Vorrichtung 1. Sobald ein oder jedes Empfangssignal über einen vorgegebenen Zeitraum unterhalb des Schwellwerts S, liegt, gilt eine Störung als erkannt und die Übertragung der Nutzdaten wird unterbrochen. Zudem erfolgt zweckmäßigerweise die Abgabe einer Störmeldung.

Während des Einrichtbetriebs werden die an den Empfängern 7, 7' generierten Empfangssignale mit einem Schwellwert S₂ bewertet, der oberhalb des Schwellwerts S₁ liegt. Liegt ein oder jedes Empfangssignal unterhalb des Schwellwerts S₂, erfolgt vorzugsweise eine Warnsignalabgabe. Anhand dieser Warnsignalabgabe kann eine Bedienperson die Umschaltung in den Justagebetrieb vornehmen.

Ein Anwendungsbeispiel für den Einsatz einer derartigen in verschiedenen Betriebsarten betriebenen Vorrichtung 1 zeigt Figur 3. Dort ist ein Ausschnitt eines Lagersystems, vorzugsweise eines Hochregallagers dargestellt. Ein längs einer vorgegebenen Bahn verfahrbares Regalbediengerät 11 ist in Abstand zu einem Regal 12 oder an einer Wand stationär angeordnet. Mittels des Regalbediengeräts 11 erfolgt eine Ein- und Auslagerung von Gegenständen aus dem Regal 12.

An dem Regalbediengerät 11 ist die erste Sensoreinheit 2a der optoelektronischen Vorrichtung 1 angeordnet. An dem Regal 12 befindet sich die zweite Sensoreinheit 2b der optoelektronischen Vorrichtung 1.

Zunächst befindet sich das Regalbediengerät 11 in geringem Abstand zum Regal 12. Hier ist die Ausrichtung der Sensoreinheiten 2a, 2b aufgrund des geringen Abstandes unproblematisch. Während des Einrichtbetriebs erfolgt eine bidirektionale Übertragung von Nutzdaten über die optischen Übertragungsstrecken.

Dabei entfernt sich das Regalbediengerät 11 fortlaufend vom Regal 12, bis der Abstand so groß geworden ist, dass die Empfangssignale an den Empfängern 7, 7' unter den Schwellwert S₂ abgesunken sind.

Daraufhin wird die Vorrichtung 1 in den Justagebetrieb umgeschaltet. Bei der im Justagebetrieb befindlichen Vorrichtung 1 erfolgt die Ausrichtung der Sensoreinheiten 2a, 2b anhand der an den Anzeigeeinheiten 10a, 10b angezeigten Empfangslichtmengen.

Sobald die Ausrichtung der Vorrichtung 1 beendet ist, erfolgt die Umschaltung in den Normalbetrieb.

### Bezugszeichenliste

- (1): Optoelektronische Vorrichtung
- (2a): Sensoreinheit
- (2b): Sensoreinheit
- (3a): Gehäuse
- (3b): Gehäuse
- (4a): Halterung
- (4b): Halterung
- (5a): Unterlage
- (5b): Unterlage
- (6): Sender
- (6'): Sender
- (7): Empfänger
- (7'): Empfänger
- (8): Sendelichtstrahlen
- (8'): Sendelichtstrahlen
- (9a): Auswerteeinheit
- (9b): Auswerteeinheit
- (10a): Anzeigeeinheit
- (10b): Anzeigeeinheit
- (11): Regalbediengerät
- (12): Regal

- V: Verteilung
- S₁: Schwellwert
- S₂: Schwellwert

## Patentansprüche

1. Optoelektronische Vorrichtung mit zwei in Abstand zueinander angeordneten Sensoreinheiten, wobei die erste Sensoreinheit einen ersten Sendelichtstrahlen emittierenden Sender und die zweite Sensoreinheit einen ersten Empfänger zum Empfang der Sendelichtstrahlen aufweist, **dadurch gekennzeichnet, dass** die zweite Sensoreinheit (2b) Mittel zur Erfassung der auf den Empfänger (7) auftreffenden Empfangslichtmenge aufweist, dass die zweite Sensoreinheit (2b) einen zweiten Sendelichtstrahlen (8') emittierenden Sender (6') und die erste Sensoreinheit (2a) einen zweiten Empfänger (7') aufweist, wobei der zweite Sender (6') und der zweite Empfänger (7') eine optische Übertragungsstrecke bilden, über welche die Werte der am ersten Empfänger (7) erfassten Empfangslichtmengen mittels der Sendelichtstrahlen (8') übertragen werden, und dass die erste Sensoreinheit (2a) eine Anzeigeeinheit (10a) aufweist, mittels derer die übertragenen Werte der Empfangslichtmengen angezeigt werden.

2. Optoelektronische Vorrichtung nach Anspruch 1, **dadurch gekennzeichnet, dass** der erste Sender (6) und der erste Empfänger (7) eine zweite optische Übertragungsstrecke bilden.

3. Optoelektronische Vorrichtung nach Anspruch 2, **dadurch gekennzeichnet, dass** die erste Sensoreinheit (2a) Mittel zur Erfassung der auf den Empfänger (7') dieser Sensoreinheit (2a) auftreffenden Empfangslichtmenge aufweist, dass die Werte der erfassten Empfangslichtmenge über die zweite optische Übertragungsstrecke übertragen werden und in einer zweiten Anzeigeeinheit (10b) in der zweiten Sensoreinheit (2b) angezeigt werden.

4. Optoelektronische Vorrichtung nach einem der Ansprüche 1-3, **dadurch gekennzeichnet, dass** der Sender (6, 6') und der Empfänger (7, 7') jeder Sensoreinheit (2a, 2b) jeweils an eine Auswerteeinheit (9a, 9b) angeschlossen ist.

5. Optoelektronische Vorrichtung nach einem der Ansprüche 1 - 4, **dadurch gekennzeichnet, dass** die oder jede Auswerteeinheit (9a, 9b) die Mittel zur Erfassung der Empfangslichtmenge bildet.

6. Optoelektronische Vorrichtung nach einem der Ansprüche 1-5, **dadurch gekennzeichnet, dass** in der oder jeder Auswerteeinheit (9a, 9b) zur Erfassung der Empfangslichtmenge die Amplitude des Empfangssignals des an die jeweilige Auswerteeinheit (9a, 9b) angeschlossenen Empfängers (7, 7`) ausgewertet wird.

7. Optoelektronische Vorrichtung nach einem der Ansprüche 4-6, **dadurch gekennzeichnet, dass** die oder jede Anzeigeeinheit (10a, 10b) an die Auswerteeinheit (9a, 9b) der jeweiligen Sensoreinheit (2a, 2b) angeschlossen und von dieser angesteuert ist.

8. Optoelektronische Vorrichtung nach Anspruch 7, **dadurch gekennzeichnet, dass** die oder jede Anzeigeeinheit (10a, 10b) von einer zeilenförmigen Leuchtdiodenanordnung gebildet ist.

9. Optoelektronische Vorrichtung nach einem der Ansprüche 1 - 8, **dadurch gekennzeichnet, dass** die Sensoreinheiten (2a, 2b) jeweils in einem Gehäuse (3a, 3b) integriert sind.

10. Optoelektronische Vorrichtung nach einem der Ansprüche 8 oder 9, **dadurch gekennzeichnet, dass** die oder jede Anzeigeeinheit (10a, 10b) in einer Wand des Gehäuses (3a, 3b) der jeweiligen Sensoreinheit (2a, 2b) integriert ist.

11. Optoelektronische Vorrichtung nach einem der Ansprüche 9 oder 10, **dadurch gekennzeichnet, dass** jedes Gehäuse (3a, 3b) an einer Halterung (4a, 4b) zur Justage der jeweiligen Sensoreinheit (2a, 2b) schwenkbar befestigt ist.

12. Optoelektronische Vorrichtung nach einem der Ansprüche 1 - 11, **dadurch gekennzeichnet, dass** diese zwischen einem Arbeitsbetrieb und einem Justagebetrieb mittels eines Schaltmittels umschaltbar ist, wobei nur während des Justagebetriebs die erfassten Empfangslichtmengen wenigstens eines Empfängers (7, 7') über eine optische Übertragungsstrecke übertragen werden.

13. Optoelektronische Vorrichtung nach Anspruch 12, **dadurch gekennzeichnet, dass** während des Arbeitsbetriebs über die oder jede optische Übertragungsstrecke Nutzdaten übertragen werden.

14. Optoelektronische Vorrichtung nach Anspruch 13, **dadurch gekennzeichnet, dass** der Arbeitsbetrieb in einen Normalbetrieb und einen Einrichtbetrieb untergliedert ist, und dass das oder ein weiteres Schaltmittel zur Umschaltung zwischen dem Normalbetrieb und dem Einrichtbetrieb vorgesehen ist.

15. Optoelektronische Vorrichtung nach Anspruch 14, **dadurch gekennzeichnet, dass** während des Normalbetriebs das Empfangssignal des oder jedes Empfängers (7, 7') einer optischen Übertragungsstrecke mit einem Schwellwert S₁ bewertet wird, wobei bei Unterschreiten des Schwellwerts S₁ die Übertragung der Nutzdaten unterbrochen wird.

16. Optoelektronische Vorrichtung nach einem der Ansprüche 14 oder 15, **dadurch gekennzeichnet, dass** während des Einrichtbetriebs das Empfangssignal des oder jeden Empfängers (7, 7') mit einem Schwellwert S₂ bewertet wird, wobei bei Unterschreiten des Schwellwerts S₂ eine Signalabgabe erfolgt.

17. Optoelektronische Vorrichtung nach Anspruch 16, **dadurch gekennzeichnet, dass** der Schwellwert S₂ größer als der Schwellwert S₁ ist.

## Claims

1. Optoelectronic device with two sensor units arranged at a mutual spacing, wherein , the first sensor unit comprises a first transmitter emitting transmitted light beams and the second sensor unit comprises a first receiver for reception of the transmitted light beams, **characterised in that** the second sensor unit (2b) comprises means for detecting the amount of received light incident on the receiver (7), that the second sensor unit (2b) comprises a second transmitter (6') emitting transmitted light beams (8') and the first sensor unit (2a) comprises a second receiver (7'), wherein the second transmitter (6') and the second receiver (7') form an optical transmission path by way of which the values of the amounts of received light detected at the first receiver (7) are transmitted by means of the transmitted light beams (8') and that the first sensor unit (2a) comprises a display unit (10a) by means of which the transmitted values of the amounts of received light are displayed.

2. Optoelectronic device according to claim 1, **characterised in that** the first transmitter (6) and the first receiver (7) form a second optical transmission path.

3. Optoelectronic device according to claim 2, **characterised in that** the first sensor unit (2a) comprises means for detection of the amount of received light incident on the receiver (7') of this sensor unit (2a), that the values of the detected amounts of received light are transmitted by way of the second optical transmission path and are displayed in a second display unit (10b) in the second sensor unit (2b).

4. Optoelectronic device according to any one of claims 1 to 3, **characterised in that** the transmitter (6, 6') and the receiver (7, 7') of each sensor unit (2a, 2b) are respectively coupled to an evaluating unit (9a, 9b).

5. Optoelectronic device according to any one of claims 1 to 4, **characterised in that** the or each evaluating unit (9a, 9b) forms the means for detection of the amount of received light.

6. Optoelectronic device according to any one of claims 1 to 5, **characterised in that** the amplitude of the received signal of the receiver (7, 7') connected with the respective evaluating unit (9a, 9b) is evaluated in the or each evaluating unit (9a, 9b) for detection of the amount of received light.

7. Optoelectronic device according to any one of claims 4 to 6, **characterised in that** the or each display unit (10a, 10b) is connected with the evaluating unit (9a, 9b) of the respective sensor unit (2a, 2b) and controlled in drive by this.

8. Optoelectronic device according to claim 7, **characterised in that** the or each display unit (10a, 10b) is formed by a lineal light-emitting diode arrangement.

9. Optoelectronic device according to any one of claims 1 to 8, **characterised in that** the sensor units (2a, 2b) are respectively integrated in a housing (3a, 3b).

10. Optoelectronic device according to one of claims 8 and 9, **characterised in that** the or each display unit (10a, 10b) is integrated in a wall of the housing (3a, 3b) of the respective sensor unit (2a, 2b).

11. Optoelectronic device according to one of claims 9 and 10, **characterised in that** each housing (3a, 3b) is pivotably fastened to a mount (4a, 4b) for adjustment of the respective sensor unit (2a, 2b).

12. Optoelectronic device according to any one of claims 1 to 11, **characterised in that** these are switchable over by means of a switching means between a working operation and an adjustment operation, wherein the detected amounts of received light of at least one receiver (7, 7') are transmitted by way of an optical transmission path only during the adjustment operation.

13. Optoelectronic device according to claim 12, **characterised in that** useful data are transmitted by way of the or each optical transmission path during the working operation.

14. Optoelectronic device according to claim 13, **characterised in that** the working operation is subdivided into a normal operation and an orienting operation and that the or a further switching means for switching over between the normal operation and the orienting operation is provided.

15. Optoelectronic device according to claim 14, **characterised in that** during the normal operation the received signal of the or each receiver (7, 7') of an optical transmission path is evaluated by a threshold value S₁, wherein the transmission of the useful data is interrupted if the threshold value S₁ is fallen below.

16. Optoelectronic device according to one of claims 14 and 15, **characterised in that** during the orienting operation the received signal of the or each receiver (7, 7') is evaluated by a threshold value S₂, wherein a signal output takes place on falling below of the threshold value S₂.

17. Optoelectronic device according to claim 16, **characterised in that** the threshold value S₂ is greater than the threshold value S₁.

## Revendications

1. Dispositif optoélectronique avec deux unités de détection disposées à distance l'une de l'autre, la première unité de détection présentant un premier émetteur émettant des rayons lumineux d'émission et la deuxième unité de détection un premier récepteur pour recevoir les rayons lumineux d'émission, **caractérisé en ce que** la deuxième unité de détection (2b) présente des moyens pour saisir la quantité de lumière de réception arrivant sur le récepteur (7), que la deuxième unité de détection (2b) présente un deuxième émetteur (6') émettant des rayons lumineux d'émission (8') et la première unité de détection (2a) un deuxième récepteur (7'), le deuxième émetteur (6') et le deuxième récepteur (7') formant une ligne de transmission optique via laquelle les valeurs des quantités de lumière de réception saisies au premier récepteur (7) sont transmises au moyen des rayons lumineux d'émission (8'), et que la première unité de détection (2a) présente une unité d'affichage (10a) au moyen de laquelle les valeurs transmises des quantités de lumière de réception sont affichées.

2. Dispositif optoélectronique selon la revendication 1, **caractérisé en ce que** le premier émetteur (6) et le premier récepteur (7) forment une deuxième ligne de transmission optique.

3. Dispositif optoélectronique selon la revendication 2, **caractérisé en ce que** la première unité de détection (2a) présente des moyens pour saisir la quantité de lumière de réception arrivant sur le récepteur (7') de cette unité de détection (2a), que les valeurs de la quantité de lumière de réception saisie sont transmises via la deuxième ligne de transmission optique et affichées sur une deuxième unité d'affichage (10b) dans la deuxième unité de détection (2b).

4. Dispositif optoélectronique selon l'une des revendications 1 à 3, **caractérisé en ce que** l'émetteur (6, 6') et le récepteur (7, 7') de chaque unité de détection (2a, 2b) sont connectés à une unité d'évaluation (9a, 9b).

5. Dispositif optoélectronique selon l'une des revendications 1 à 4, **caractérisé en ce que** la ou chaque unité d'évaluation (9a, 9b) forme les moyens pour saisir la quantité de lumière de réception.

6. Dispositif optoélectronique selon l'une des revendications 1 à 5, **caractérisé en ce que** dans la ou chaque unité d'évaluation (9a, 9b), pour saisir la quantité de lumière de réception, l'amplitude du signal de réception du récepteur (7, 7') connecté à l'unité d'évaluation (9a, 9b) respective est évaluée.

7. Dispositif optoélectronique selon l'une des revendications 4 à 6, **caractérisé en ce que** la ou chaque unité d'affichage (10a, 10b) est connectée à l'unité d'évaluation (9a, 9b) de l'unité de détection (2a, 2b) respective et commandée par celle-ci.

8. Dispositif optoélectronique selon la revendication 7, **caractérisé en ce que** la ou chaque unité d'affichage (10a, 10b) est formée par un agencement linéaire de diodes électroluminescentes.

9. Dispositif optoélectronique selon l'une des revendications 1 à 8, **caractérisé en ce que** les unités de détection (2a, 2b) sont chacune intégrées dans un boîtier (3a, 3b).

10. Dispositif optoélectronique selon l'une des revendications 8 ou 9, **caractérisé en ce que** la ou chaque unité d'affichage (10a, 10b) est intégrée dans une paroi du boîtier (3a, 3b) de l'unité de détection (2a, 2b) respective.

11. Dispositif optoélectronique selon l'une des revendications 9 ou 10, **caractérisé en ce que** chaque boîtier (3a, 3b) est fixé pivotant à un support (4a, 4b) pour le réglage de l'unité de détection (2a, 2b) respective.

12. Dispositif optoélectronique selon l'une des revendications 1 à 11, **caractérisé en ce que** celui-ci est commutable entre un mode de travail et un mode de réglage à l'aide d'un moyen de commutation, les quantités de lumière de réception saisies d'au moins un récepteur (7, 7') n'étant transmises via une ligne de transmission optique que pendant le mode de réglage.

13. Dispositif optoélectronique selon la revendication 12, **caractérisé en ce que** pendant le mode de travail, des données utiles sont transmises via la ou chaque ligne de transmission optique.

14. Dispositif optoélectronique selon la revendication 13, **caractérisé en ce que** le mode de travail est subdivisé en un mode normal et un mode de préparation, et que le ou un autre moyen de commutation est prévu pour la commutation entre le mode normal et le mode de préparation.

15. Dispositif optoélectronique selon la revendication 14, **caractérisé en ce que** pendant le mode normal, le signal de réception du ou de chaque récepteur (7, 7') d'une ligne de transmission optique est comparé avec une valeur seuil S₁, la transmission des données utiles étant interrompue en cas de passage sous la valeur seuil S₁.

16. Dispositif optoélectronique selon l'une des revendications 14 ou 15, **caractérisé en ce que** pendant le mode de préparation, le signal de réception du ou de chaque récepteur (7, 7') est comparé avec une valeur seuil S₂, un signal étant émis en cas de passage sous la valeur seuil S₂.

17. Dispositif optoélectronique selon la revendication 16, **caractérisé en ce que** la valeur seuil S₂ est supérieure à la valeur seuil S₁.
